# EUROPEAN PATENT APPLICATION

(11) **EP 1 132 256 A2**
(43) Date of publication of application: **12.09.2001**
(21) Application number: 01200867.8
(22) Date of filing: 08.03.2001
(51) Int. Cl.: B60P 1/44

(54) **Translation device, in particular for side loading boards of industrial vehicles**

(30) Priority: 08.03.2000 IT MI200457
(71) Applicant: Nelzi, Giampaolo, 22070 Appiano Gentile (Como) (IT)
(72) Inventor: Nelzi, Giampaolo, 22070 Appiano Gentile (Como) (IT)
(74) Representative: Zanardo, Giovanni

(57) **Abstract**

A translation device (TOT), in particular for side loading boards (SC) of industrial vehicles, comprises a group of rails (RO1, RO2), each carrying at least one flange (FL1, FL2), where said flanges (FL1, FL2) can be actuated in translation by at least one actuator (CI). The actuator (CI) is connected to a group of cables (CA1, CA2, CA3, CA4) contained in a plurality of sheaths (GU1, GU2, GU3, GU4) where the cables (CA1, CA2, CA3, CA4) and the sheaths (GU1, GU2, GU3, GU4) are operatively associated to the rails (RO1, RO2) and to the flanges (FL1, FL2) so as to impart the motion of the actuator (CI) to the same flanges (FL1, FL2).

## Description

The present invention relates to a translation device, in particular for side loading boards of industrial vehicles.

The mechanism of side loading boards for industrial vehicles is known, and it consists of a platform fixed to the lorry frame through two hinged quadrilaterals that, moved by hydraulic cylinders, rises or lowers in horizontal direction, thus transporting loads on a platform.

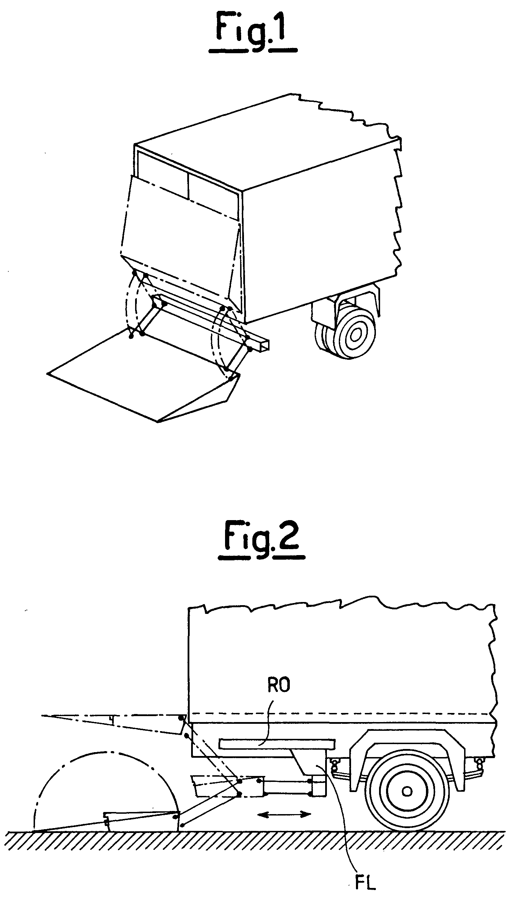

These side boards can be divided into two main groups: with vertically closed footboard during the trip (figure 1), or with footboard folded once or twice, and the assembly "retracted" during running below the rear projection of the motor vehicle (figure 2).

For the purpose of translating the side loading board assembly in the retractile version (figure 2), the suspension flanges FL are made to slide on special rails RO applied to the vehicle frame.

The thrust needed for such sliding can be provided by different systems, for example by a hydraulic cylinder, a reducer or a hydraulic motor.

The most efficient and less expensive system is given by a single or double hydraulic cylinder, generally arranged between the middle of the central bearing piping of the side board and a cross member applied to the motor vehicle frame. It is efficient because the hydraulic cylinder allows an excellent locking of the hoisting side board in the desired position, simply obtained with the blocking of the hydraulic oil into said hydraulic cylinder.

The evolution of industrial vehicles has brought to new systems of axis suspension and lifting, which imply the presence of considerable dimensions (for example pneumatic bellows, compressed air cylinders) in the middle of the vehicle frame, where the hydraulic translation cylinders are normally mounted. Hence the need of either moving the hydraulic translation cylinder - with the difficulty of managing its thrust applied in a non-central position - or of finding other equally valid and low-cost systems.

The side thrust, applied through the same cylinder, would be the simplest solution but nevertheless, it implies the big risk of sticking of the of the sliding flange FL on the opposed side with respect to that where the side thrust is applied, with the probable rupture of some parts, given the force of the hydraulic thrust. Such sticking would also be amplified by the reduced length of flanges FL.

The finding of the present invention solves such problems in an economic and functional manner.

Thus, purpose of the present invention is that of eliminating the above technical disadvantages by realising a translation device, in particular for side loading boards of industrial vehicles, which should be housed in the lower side of the industrial vehicle without any particular constraints as regards its position, so as to integrally use the available space of the same industrial vehicle.

Another purpose of the invention is that of realising a translation device which should operate with a very low risk of stickings of its elements.

Last but not least, another purpose of the invention is that of realising a translation device, in particular for side loading boards of industrial vehicles, which should be substantially simple, safe and reliable.

These and other purposes according to the present invention are achieved by realising a translation device, in particular for side loading boards of industrial vehicles, according to claim 1.

Moreover, further features of the present invention are defined in the successive claims.

Advantageously, for the purpose of preventing dangers of stickings, different thrust synchronisation systems can be applied, which however always impose the use of an axis for transmitting the force from one side to the other, which for reasons of economy and difficulty of other applications, must be mounted at the top, as close as possible to the sliding parts. In this position, the axis prevents the translation below the leaf spring blocks. The lowering of such axis implies an expensive and precise pulley backslash.

Further features and advantages of a translation device, in particular for side loading boards of industrial vehicles according to the present invention will appear more clearly from the following exemplificative and non-limiting description made with reference to the attached drawings. In such drawings:
- Figure 1 shows a perspective view of an industrial vehicle with a traditional vertically closed side board;
- Figure 2 shows a side elevation view of an industrial vehicle with a traditional folded side board;
- Figure 3 shows a perspective schematic view of a translation device according to the present invention, in a first embodiment;
- Figure 4 shows a perspective schematic view of the translation device according to the present invention, in a second embodiment;
- Figure 5 shows a perspective view of an actuation unit that can be used with the translation device according to the invention in a third embodiment; and
- Figure 6 shows a plan top view of the actuation unit of figure 5.

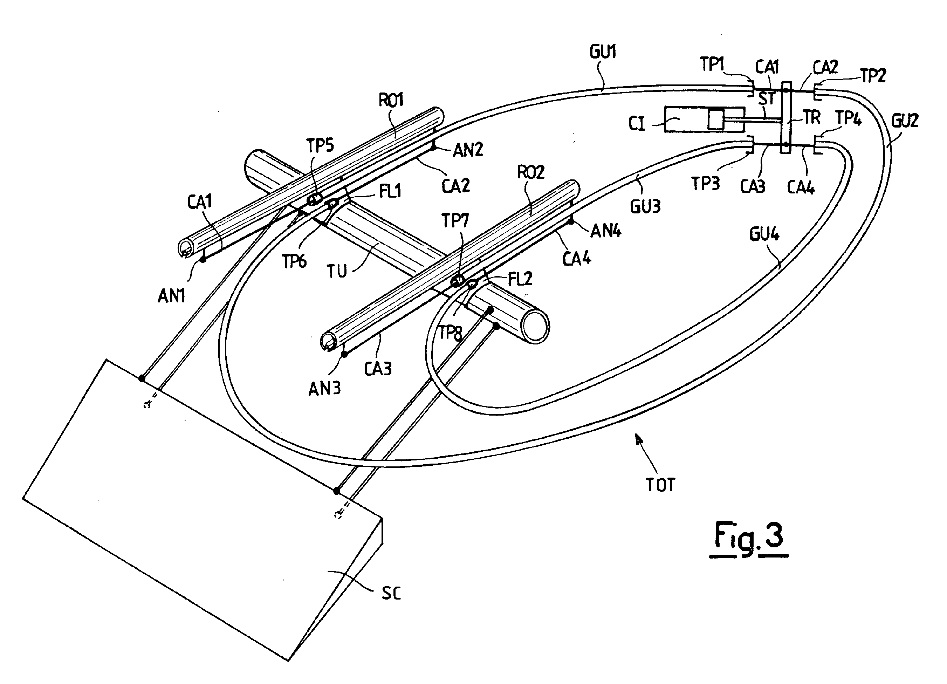

With reference to figures 3-6, there is shown a translation device, in particular for side loading boards SC of industrial vehicles, indicated with reference numeral TOT.

In particular, in figure 3, a hydraulic cylinder CI, as actuator, is provided at an end of a stem ST, which is orthogonal and integral with a cross member TR. Four cables CA1, 2, 3, 4 are fastened to cross member TR, which are inserted into four flexible elastic sheaths GU1, 2, 3, 4. The ends of cables CA1, 2, 3, 4 are locked by through terminals TP1, 2, 3, 4, 5, 6, 7, 8, which are fixed and unmovable both with respect to the hydraulic cylinder CI and with respect to sliding flanges FL1, 2. Such flanges FL1, 2 slide into or outside translation rails RO1, 2, and they support a central piping TU of a side loading board or hoist SC. The ends of the four cables CA1, 2, 3, 4 exit from the opposed sides of sheaths GU1, 2, 3, 4 and they are anchored to the ends of the sliding rails RO1, 2 indicatively in anchoring points AN 1, 2, 3, 4. In practice, cables CA1, 2, 3, 4 and sheaths GU1, 2, 3, 4 form two connection rings between cylinder CI and flanges FL.

The operation of the translation device TOT, in particular for side loading boards SC of industrial vehicles, according to the invention, is substantially as follows.

When cylinder CI is extended or retracted, with the known hydraulic systems, the four cables CA1, 2, 3, 4 extend or retract two by two in a perfectly synchronised manner: cables CA1 and CA3, opposed to cables CA2 and CA4. Cables CA1, 2, 3, 4 move in a perfectly synchronised manner the two flanges FL1, 2 and thus, the central piping TU of the side loading board or hoist SC. The side board SC remains locked in the desired position as the hydraulic cylinder CI is locked.

The flexibility of sheaths GU1, 2, 3, 4 practically allows positioning cylinder CI in any available place, and in the preferred but non-limiting embodiment, cylinder CI shall be preferably positioned close to the hydraulic force source, normally on the same side board SC.

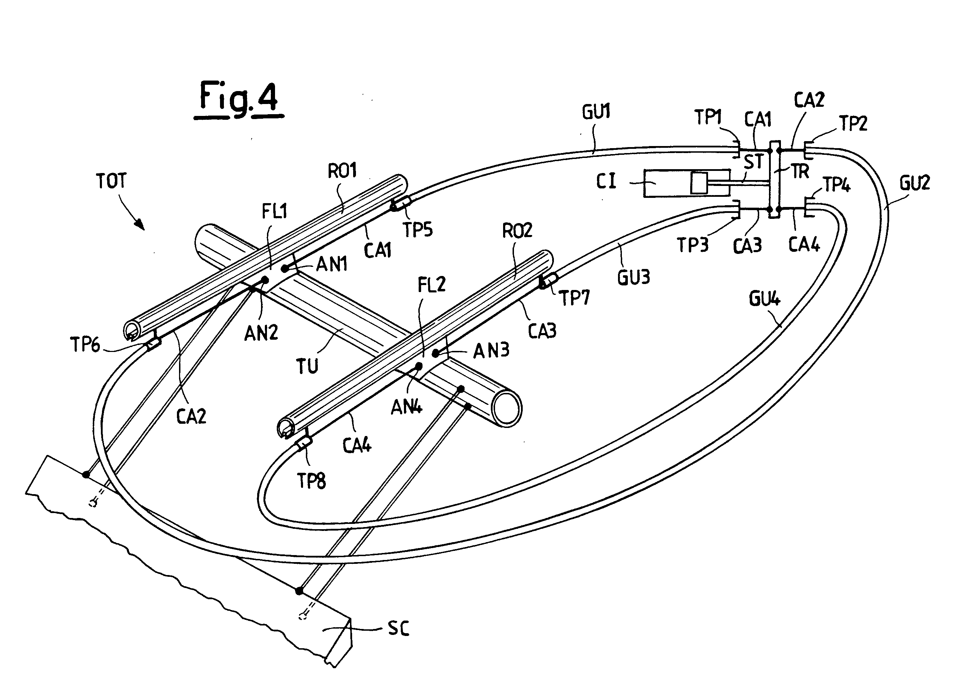

In Figure 4 there is shown an alternative solution, which is preferred if the hydraulic source is fixed on the motor vehicle rather than on side board SC.

In this case, it is preferable that the hydraulic cylinder CI be fixedly arranged on the vehicle, close to the hydraulic source. As a consequence, sheaths GU1, 2, 3, 4, instead of ending fixed to the translation flanges FL1, 2, end fixed to the ends of the sliding rails RO1, 2, and cables CA1, 2, 3, 4 exit from sheaths GU1, 2, 3, 4 and are fixed to flanges FL1, 2.

Besides the embodiment shown in figures 3 and 4, for the purpose of minimising the size of the mechanism it is possible to reduce the stroke and consequently, the size of cylinder CI, and multiply the stroke of cables CA1, 2, 3, 4 by using the known hoisting method.

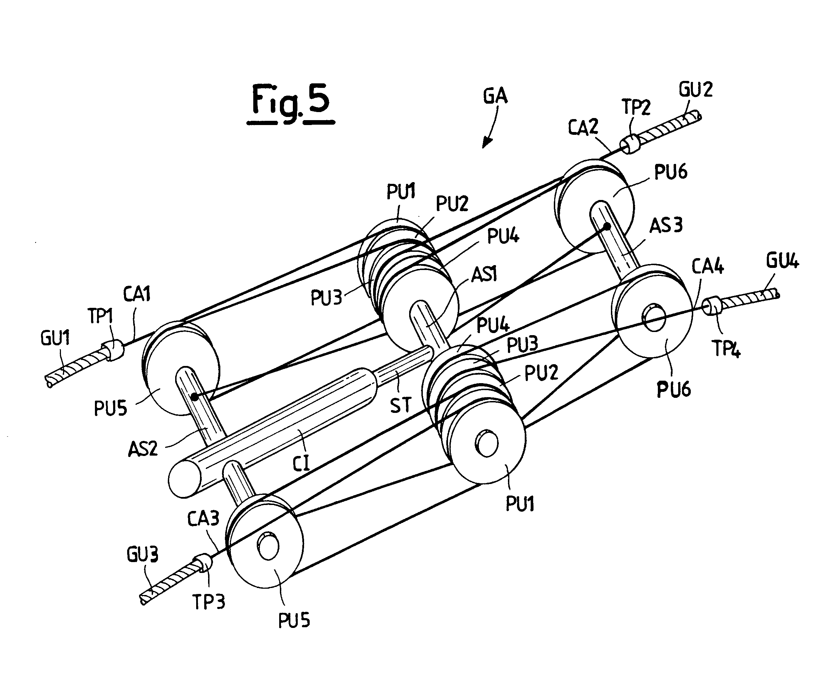

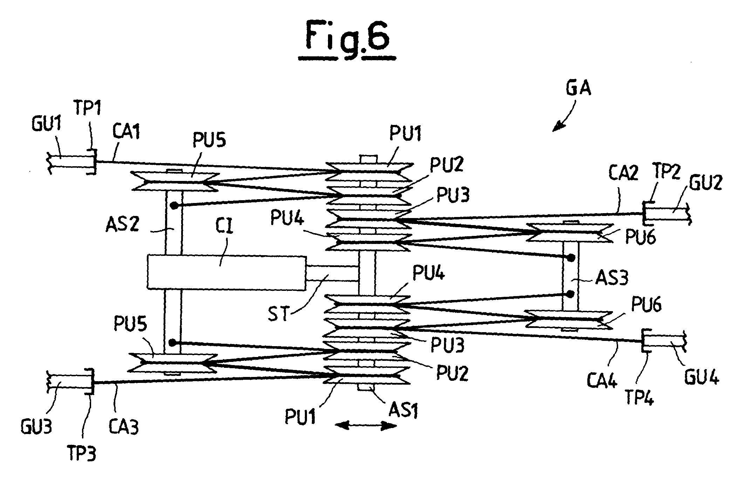

In figure 5 in a perspective view and in figure 6 in a plan view there is shown an example of an actuation unit GA which multiplies the stroke by four times.

The actuation unit GA comprises cylinder CI, provided with stem ST which carries a first axis AS1 at its end. Axis AS1 supports eight pulleys arranged in two groups of four pulleys. The four pulleys of each group are indicated with reference numeral PU1, 2, 3, 4 starting from the ends of axis AS1 towards its centre.

Moreover, the actuation unit GA also comprises a second axis AS2, which supports two pulleys PU5, arranged at pulleys PU1 and PU2. Morever, the actuation unit GA comprises a third axis AS3 which carries two further pulleys PU6 arranged at pulleys PU3 and PU4. Axis AS1 is arranged between axes AS2 and AS3.

Cables CA1 and CA3 exit from sheaths GU1, GU3 and wind around pulleys PU1, then around pulleys PU5, pulleys PU2 and finally they are fastened onto axis AS2.

Similarly, cables CA2 and CA4 exit from sheaths GU2, GU4 and wind around pulleys PU3, then around pulleys PU6, pulleys PU4 and finally they are fastened onto axis AS3.

By actuating cylinder CI of the actuation unit GA, the stroke of cables CA1, 2, 3, 4 is multiplied with respect the movement of stem ST of cylinder CI by four times.

Of course, all embodiments and positions of the pulleys are possible for realising the desired number of multiplications and reducing the overall dimensions.

In at least one end position of the cables and/or sheaths there are arranged some known systems for adjusting the cable and/or sheath tension, not shown for simplicity.

In practice, it has been noted that the translation device, in particular for side loading boards of industrial vehicles, according to the invention, is particularly advantageous since it can be housed below the industrial vehicle with great freedom, so as to fully use the available space. Moreover, the side board according to the invention operates with a very limited danger of stickings of its elements.

Of course, further changes and variants are possible besides those already described; thus, for example, at least two of cables CA1, CA2, CA3, CA4 are free from sheath GU1, GU2, GU3, GU4 are are operatively associated to rails RO1, RO2 and to flanges FL1, FL2 in a direct manner. Moreover, at least one of said cables CA1, CA2, CA3, CA4 can be free from the relevant sheath GU1, GU2, GU3, GU4 and transmitted on at least one pulley.

The translation device, in particular for side loading boards of industrial vehicles, thus conceived can be subject to several further changes and variants, all falling within the scope of the invention; moreover, all details can be replaced with technically equivalent elements. In practice, the materials used as well as the sizes can be of any type according to the technical requirements.

## Claims

1. Translation device (TOT) in particular for side loading boards (SC) of industrial vehicles, comprising a group of rails (RO1, RO2), each carrying at least one flange (FL1, FL2), where said flanges (FL1, FL2) can be actuated in translation by at least one actuator (CI), **characterised in that** said actuator (CI) is connected to a group of cables (CA1, CA2, CA3, CA4) of which at least two are each contained in a sheath (GU1, GU2, GU3, GU4), said cables (CA1, CA2, CA3, CA4) and said sheaths (GU1, GU2, GU3, GU4) being operatively associated to said rails (RO1, RO2) and to said flanges (FL1, FL2) so as to impart the motion of said actuator (CI) to said flanges (FL1, FL2).

2. Translation device (TOT) according to claim 1, **characterised in that** said cables (CA1, CA2, CA3, CA4) and said sheaths (GU1, GU2, GU3, GU4) form at least one ring.

3. Translation device (TOT) according to claim 2, **characterised in that** each of said rings comprises at least two sheaths (GU1, GU2, GU3, GU4).

4. Translation device (TOT) according to claim 3, **characterised in that** each of said rings also comprises at least two cables (CA1, CA2, CA3, CA4), each sliding in one of said sheaths (GU1, GU2, GU3, GU4).

5. Translation device (TOT) according to claim 4, **characterised in that** a first end of said cables (CA1, CA2, CA3, CA4) is fastened to a cross member (TR) which can be actuated in translation by said actuator (CI), and a corresponding first end of said sheaths (GU1, GU2, GU3, GU4) is locked into fixed terminals (TP1, TP2, TP3, TP4) with respect to said actuator (CI).

6. Translation device (TOT) according to claim 5, **characterised in that** a second end of each of said sheaths (GU1, GU2, GU3, GU4) of each ring is fastened to said flanges (FL1, FL2) and, correspondingly, a second end of said cables (CA1, CA2, CA3, CA4) is fastened to extreme and opposed points (AN1, AN2, AN3, AN4) of said rails (RO1, RO2).

7. Translation device (TOT) according to claim 5, **characterised in that** a second end of each of said sheaths (GU1, GU2, GU3, GU4) of each ring is fastened to extreme and opposed points (AN1, AN2, AN3, AN4) of said rails (RO1, RO2) and correspondingly, a second end of said cables (CA1, CA2, CA3, CA4) is fastened to said flanges (FL1, FL2).

8. Translation device (TOT) according to claim 1, **characterised in that** said actuator (CI) comprises at least one hydraulic cylinder.

9. Translation device (TOT) according to claim 8, **characterised in that** it comprises an actuation unit (GA) associated to said actuator (CI) and adapted to multiply the stroke of said cables (CA1, CA2, CA3, CA4) with respect to the stroke of a stem (ST) of said hydraulic cylinder (CI).

10. Translation device (TOT) according to claim 9, **characterised in that** said actuation unit (GA) comprises two axes (AS2, AS3) supported by a frame, each carrying first and second pulleys (PU5, PU6), between said axes (AS2, AS3) being comprised a further axis (AS1), supported at the end of a stem (ST) of said hydraulic cylinder (CI), which in turn supports third pulleys (PU1-PU4), where some of said cables (CA1, CA3) alternatively wind on some of said third pulleys (PU1, PU2) and on said first pulleys (PU5) and are fastened to said axis (AS2) of said first pulleys (PU5), at the same time other of said cables (CA2, CA4) alternatively wind on others of said third pulleys (PU3, PU4) and on said second pulleys (PU6) and are fastened to said axis (AS3) of said second pulleys (PU6) so that movements of said cylinder (CI) cause corresponding multiplied or incremented strokes of said cables (CA1, CA2, CA3, CA4).

11. Translation device (TOT) according to claim 1, **characterised in that** in its lower side it is constrainable to a frame of an industrial vehicle, wherein at least one central piping (TU) fastened to said at least one flange (FL1, FL2) supports said side loading board or hoist (SC).

12. Translation device (TOT) according to claim 1, **characterised in that** at least two of said cables (CA1, CA2, CA3, CA4), which are free from sheath (GU1, GU2, GU3, GU4), are operatively associated to sad rails (RO1, RO2) and to said flanges (FL1, FL2) in a direct manner.

13. Translation device (TOT) according to claim 12, **characterised in that** said cables (CA1, CA2, CA3, CA4) free from sheath (GU1, GU2, GU3, GU4), are transmitted on two pulleys.
